# EUROPÄISCHE PATENTANMELDUNG

(11) **EP 1 826 542 A1**
(43) Veröffentlichungstag der Anmeldung: **29.08.2007**
(21) Anmeldenummer: 06023211.3
(22) Anmeldetag: 08.11.2006
(51) Int. Cl.: G01K 17/02

(54) **Verdunstungsflüssigkeit und Erfassungsrohr sowie Vorrichtung zur Erfassung einer von einem Raumheizkörper abgegebenen Wärmemenge**

(30) Priorität: 23.02.2006 DE 102006008422
(71) Anmelder: Techem Energy Services GmbH, 65760 Eschborn (DE)
(72) Erfinder: Reichard, Thomas, 61194 Niddatal (DE)
(74) Vertreter: KEIL & SCHAAFHAUSEN Patentanwälte

(57) **Zusammenfassung**

Die Erfindung bezieht sich auf eine Vorrichtung zur Erfassung einer von einem Raumheizkörper über einen bestimmten Zeitraum abgegebenen Wärmemenge nach dem Verdunstungsprinzip mit einem System umfassend mindestens ein an einem Ende geschlossenes und an dem anderen Ende offenes Erfassungsrohr und eine Verdunstungsflüssigkeit. Das mindestens eine Erfassungsrohr ist mindestens teilweise mit der Verdunstungsflüssigkeit gefüllt. Das System weist Mittel zur Verringerung der Benetzung der Oberfläche des Erfassungsrohrs mit der Verdunstungsflüssigkeit auf. Die Erfindung betrifft ferner ein entsprechendes Erfassungsrohr und eine entsprechende Verdunstungsflüssigkeit.

## Beschreibung

Die Erfindung bezieht sich auf eine Verdunstungsflüssigkeit mit mindestens einer ersten Komponente und ein Erfassungsrohr zum Einsatz in einer Vorrichtung zur Erfassung einer von einem Raumheizkörper über einen bestimmten Zeitraum abgegebenen Wärmemenge nach dem Verdunstungsprinzip. Das Erfassungsrohr ist an einem Ende geschlossen und an dem anderen Ende offen. Die Erfindung betrifft ferner eine Vorrichtung zur Erfassung einer von einem Raumheizkörper über einen bestimmten Zeitraum abgegebenen Wärmemenge nach dem Verdunstungsprinzip mit einem System umfassend mindestens ein an einem Ende geschlossenes Erfassungsrohr und eine Verdunstungsflüssigkeit, wobei das mindestens eine Erfassungsrohr mindestens teilweise zur Füllung mit der Verdunstungsflüssigkeit bestimmt ist.

Bekannte Vorrichtungen zur Erfassung einer von einem Raumheizkörper über einen bestimmten Zeitraum abgegebenen Wärmemenge, auch Heizkostenverteiler genannt, arbeiten nach dem Verdunstungsprinzip. Hierfür weisen die bekannten Heizkostenverteiler mindestens ein an einem Ende geschlossenes Erfassungsrohr und eine darin eingefüllte Verdunstungsflüssigkeit auf. Diese Heizkostenverteiler sind an einem Heizkörper oder dergl. befestigt und dienen zur Bestimmung der Wärmeabgabe des jeweiligen Raumheizkörpers über einen bestimmten Zeitraum, beispielsweise über ein Jahr. Über diesen Zeitraum verdunstet die in dem Erfassungsrohr angeordnete Verdunstungsflüssigkeit in Abhängigkeit von der Temperatur und der Dauer der Temperatureinwirkung. Nach Ende eines Messzeitraums wird erfasst, wie groß der Anteil der verdunsteten Flüssigkeit bzw. der nicht verdunsteten Flüssigkeit in dem Erfassungsrohr ist. Diese Anteile stellen einen Nährungswert für das Zeitintegral der charakteristischen Temperatur der Raumheizfläche dar. Zusammen mit weiteren Parametern wie der Norm-Wärmeleistung der Raumheizfläche oder der Art des Wärmekontakts zwischen der Raumheizfläche und dem Heizkostenverteiler kann hieraus ein Wert für die in der Messzeit von der Raumheizfläche abgegebene und vom Nutzer verbrauchte Wärmemenge ermittelt werden. Nach Beendigung eines Messzeitraums und Ermittlung dieses Verbrauchswerts wird das System aus Erfassungsrohr und Verdunstungsflüssigkeit durch ein neues ersetzt.

Als Verdunstungsflüssigkeiten werden beispielsweise Methylbenzoat, Benzylacetat oder 1-Hexanol verwendet, deren Verdunstung so langsam erfolgt, dass der Vorrat in dem Erfassungsrohr für den Messzeitraum eines Jahres ausreicht. Methylbenzoat, Benzylacetat oder 1-Hexanol sind benetzende Flüssigkeiten mit einer geringen Oberflächenspannung. In dem Erfassungsrohr haben sie eine konkave (nach unten gekrümmte bzw. nach innen gewölbte) Oberfläche. Aufgrund der Oberflächenspannung der Verdunstungsflüssigkeit, der Grenzflächenspannung zwischen der Verdunstungsflüssigkeit und dem Erfassungsrohr und der Oberflächenenergie des Erfassungsrohrs wird ein kleiner Benetzungswinkel zwischen Verdunstungsflüssigkeit und Erfassungsrohr-Innenwand ausgebildet. Die benetzende Flüssigkeit versucht, sich auf der Oberfläche des Erfassungsrohrs auszubreiten. Hiergegen wirkt die Schwerkraft der Flüssigkeit, die ein Hochsteigen dieser an dem Erfassungsrohr verhindert. Bei sinkendem Flüssigkeitspegel verändert sich unter bestimmten Umständen die Größe der Oberfläche der Verdunstungsflüssigkeit. Hierzu können eine nicht konstante Oberflächenspannung der Verdunstungsflüssigkeit, eine nicht konstante Grenzflächenspannung zwischen Verdunstungsflüssigkeit und Erfassungsrohr, eine ungleichmäßig verteilte bzw. nicht konstante Oberflächenenergie der Innenoberfläche des Erfassungsrohrs oder eine ungleichmäßig verteilte bzw. nicht konstante Oberflächenbeschaffenheit der Innenoberfläche des Erfassungsrohrs, jeweils in Abhängigkeit von Temperatur und/oder Zeit beitragen. Da die Verdunstungsgeschwindigkeit von der Größe der frei liegenden Oberfläche der Verdunstungsflüssigkeit abhängig ist, wird bei einer Änderung der Größe der Oberfläche die Genauigkeit des Wärmemengen-Verbrauchswerts beeinflusst.

Aufgabe der vorliegenden Erfindung ist es daher, die Genauigkeit bei der Erfassung der von einem Raumheizkörper abgegebenen Wärmemenge zu erhöhen.

Diese Aufgabe wird bei der Verdunstungsflüssigkeit der eingangs genannten Art dadurch gelöst, dass die Verdunstungsflüssigkeit mindestens eine zweite Komponente aufweist, welche die Benetzung der inneren Oberfläche des Erfassungsrohrs der Vorrichtung zur Erfassung der Wärmemenge verringert. Hierdurch werden die Oberflächenspannung der Verdunstungsflüssigkeit und/oder die Grenzflächenspannung zwischen Erfassungsrohr und Verdunstungsflüssigkeit verändert, so dass der Benetzungswinkel vergrößert wird und die Verdunstungsflüssigkeit die Innenwand des Erfassungsrohrs weniger benetzt. Hierdurch wird bewirkt, dass die frei liegende Oberfläche der Verdunstungsflüssigkeit bei sinkendem Flüssigkeitspegel annähernd gleich bleibt.

In einem bevorzugten Ausführungsbeispiel ist die zweite Komponente eine Verbindung aus der Gruppe der hydrophoben Verbindungen und/oder der Gruppe der oleophoben Verbindungen und/oder der Gruppe der ultraphoben Verbindungen und/oder eine Verbindung aus der Gruppe der Fluor-Verbindungen, beispielsweise Fluorpolymere, und/oder eine Verbindung aus der Gruppe der Polymer-Verbindungen, beispielsweise Polyphosphazene, und/oder eine Verbindung aus der Gruppe der Silikonverbindungen, beispielsweise Polysiloxane, z.B. Polydimethylsiloxan, und/oder eine Verbindung aus der Gruppe der Silanverbindungen, beispielsweise Alkoxysilane und/oder Tetraethoxysilane und/oder Methylalkoxysilane und/oder Polysilane. Diese Verbindungen sind besonders gut geeignet, die benetzende Wirkung der Verdunstungsflüssigkeit bei einer Zugabe zu den bekannten Verdunstungsflüssigkeiten wie Methylbenzoat, Benzylacetat oder 1-Hexanol herabzusetzen.

Die Aufgabe wird erfindungsgemäß auch dadurch gelöst, dass mindestens ein Teil der inneren Oberfläche des Erfassungsrohrs derart bearbeitet ist, dass die Benetzung der Oberfläche des Erfassungsrohrs mit der Verdunstungsflüssigkeit in diesem Bereich verringert ist. Hierdurch werden die Oberflächenenergie des Erfassungsrohrs und/oder die Grenzflächenspannung zwischen Verdunstungsflüssigkeit und Erfassungsrohr derart verändert, dass eine abperlende Wirkung eintritt und der Benetzungswinkel zwischen Verdunstungsflüssigkeit und Erfassungsrohr vergrößert wird. Hierdurch wird ebenfalls erreicht, dass bei sinkendem Flüssigkeitspegel die Größe der frei liegenden Oberfläche der Verdunstungsflüssigkeit konstant bleibt.

In einem besonders bevorzugten Ausführungsbeispiel wird die innere Oberfläche des Erfassungsrohrs mit einer Beschichtung versehen. Eine derartige Beschichtung kann besonders einfach realisiert werden. Bei Erfassungsrohren aus Glas kann in einem bevorzugten Ausführungsbeispiel die Oberfläche mittels Nanopartikeln und/oder mittels einer Verbindung aus der Gruppe der Polymer-Verbindungen, vorzugsweise mittels einer Verbindung aus der Gruppe der Polyethylen-Verbindungen, beispielsweise Polyethylen oder Polyoxyethylen(20)-sorbitanmonooleat, und/oder vorzugsweise mittels einer Verbindung aus der Gruppe der Polyphosphazene und/oder vorzugsweise mittels einer Verbindung aus der Gruppe der Silikon-Verbindungen, beispielsweise eine Lösung oder eine Emulsion von oligomeren oder polyomeren Dimethylsiloxanen und/oder eine wässrige Emulsion aus Polydimethylsiloxan und Emulgatoren und/oder Polydimethylsiloxan ggf. mit anschließender thermischer Fixierung der Beschichtung am Glas und/oder eine Verbindung aus der Gruppe der Polysiloxane und/oder eine Verbindung aus der Gruppe der Silane, beispielsweise Alkoxysilane und/oder Tetraethoxysilane und/oder Methylalkoxysilane und/oder Polysilane, und/oder mittels einer Verbindung aus der Gruppe der Fluor-Verbindungen, vorzugsweise mittels einer Verbindung aus der Gruppe der Fluorpolymere, beispielsweise als Nanopartikel und/oder fluorierte Polyurethane und/oder Polytetrafluorethylen (PTFE, Teflon), und/oder vorzugsweise mittels einer Verbindung aus der Gruppe der Fluoralkylverbindungen, und/oder mittels einer Verbindung aus der Gruppe der Petroleumdestillat-Verbindungen beschichtet sein.

Bei einer Beschichtung der inneren Oberfläche des Erfassungsrohrs mittels Nanopartikeln ist es von Vorteil, wenn die Nanopartikel stäbchenförmig und irregulär angeordnet sind sowie eine mittlere Schichtdicke zwischen 20 und 40 nm, vorzugsweise von etwa 30 nm bilden. Hierdurch wird eine ultraphobe Oberfläche auf dem Erfassungsrohr ausgebildet, die fast nicht mehr zu benetzen ist. In einem weiteren Ausführungsbeispiel kann die innere Oberfläche des Erfassungsrohrs mittels Nanopartikeln beschichtet sein, wobei die Beschichtung eine sehr feine, mikrostrukturierte Noppenstruktur auf der inneren Oberfläche des Erfassungsrohrs bildet. In einem weiteren bevorzugten Ausführungsbeispiel sind die Nanopartikel mindestens teilweise aus einer Verbindung aus der Gruppe der Titan-Silane gebildet.

Die Aufgabe wird ferner durch eine Vorrichtung zur Erfassung einer von einem Raumheizkörper über einen bestimmten Zeitraum abgegebenen Wärmemenge nach dem Verdunstungsprinzip der oben angegebenen Art gelöst, indem das System Mittel zur Verringerung der Benetzung der Oberfläche des Erfassungsrohrs mit der Verdunstungsflüssigkeit aufweist. Diese Mittel, die sowohl die Verdunstungsflüssigkeit als auch das Erfassungsrohr oder beide Elemente betreffen können, bewirken, dass die frei liegende Oberfläche der Verdunstungsflüssigkeit bei sinkendem Flüssigkeitspegel annähernd gleich bleibt. In vorteilhafter Weise sind Erfassungsrohr und/oder Verdunstungsflüssigkeit hierfür wie oben angegeben ausgestaltet.

Weitere Ziele, Merkmale, Vorteile und Anwendungsmöglichkeiten der Erfindung ergeben sich aus der nachfolgenden Beschreibung von Ausführungsbeispielen anhand der beigefügten Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den einzelnen Ansprüchen oder deren Rückbeziehung.

Es zeigen:
- Fig. 1: schematisch in Draufsicht eine erfindungsgemäße Vorrichtung zur Erfassung einer von einem Raumheizkörper über einen bestimmten Zeitraum abgegebenen Wärmemenge nach dem Verdunstungsprinzip und
- Fig. 2: ein Ausführungsbeispiel eines erfindungsgemäßen Erfassungsrohrs (schematisch, in Draufsicht).

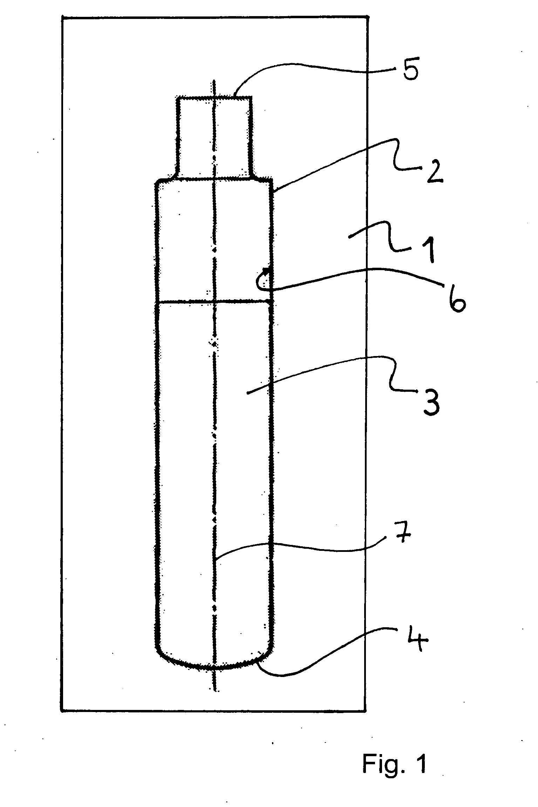

Die in Fig. 1 schematisch dargestellte, erfindungsgemäße Vorrichtung zur Erfassung einer von einem Raumheizkörper über einen bestimmten Zeitraum abgegebenen Wärmemenge 1 (Heizkostenverteiler) nach dem Verdunstungsprinzip weist ein System mit einem Erfassungsrohr 2 und einer Verdunstungsflüssigkeit 3 auf. Zur Erfassung der Wärmemenge ist der Heizkostenverteiler 1 an einem nicht dargestellten Raumheizkörper angeordnet, d.h. beispielsweise an der in den Raum zeigenden Oberfläche des Heizkörpers etwa mittig angehängt. Das Erfassungsrohr 2 ist an seinem unteren Ende 4 geschlossen und an seinem oberen Ende 5 offen. An seinem oberen Ende 5 weist das Erfassungsrohr 2 eine Einschnürung auf, die auch entfallen kann.

Die Verdunstungsflüssigkeit 3 bildet die Füllung des Erfassungsrohrs 2, wobei das Erfassungsrohr 2 mindestens teilweise durch die Verdunstungsflüssigkeit 3 gefüllt ist. Die Höhe des Pegels der Verdunstungsflüssigkeit 3 in dem Erfassungsrohr 2 wird anhand einer nicht dargestellten, neben dem Erfassungsrohr 2 angeordneten Skala erfasst. Hierdurch kann bestimmt werden, welcher Anteil der Verdunstungsflüssigkeit 3 bereits verdunstet bzw. welcher noch nicht verdunstet ist. In dem in Fig. 1 dargestellten Ausführungsbeispiel besteht die Verdunstungsflüssigkeit 3 aus einer ersten Komponente, beispielsweise aus Methylbenzoat, Benzylacetat oder 1-Hexanol. Diese Komponente verdunstet entsprechend der Temperatur und der Dauer der Temperatureinwirkung und ermöglicht somit die Erfassung der über den Messzeitraum von dem Heizkörper abgegebenen Wärmemenge. Die Verdunstungsflüssigkeit kann jedoch auch aus mehreren ersten Komponenten, beispielsweise unter Verwendung von Methylbenzoat, Benzylacetat oder 1-Hexanol, zusammengesetzt sein. Die Flüssigkeit weist ferner mindestens eine zweite Komponente auf, welche die Benetzung der inneren Oberfläche 6 des Erfassungsrohrs 2 verringert. Diese zweite Komponente kann beispielsweise eine Verbindung aus der Gruppe der hydrophoben Verbindungen und/oder aus der Gruppe der oleophoben Verbindungen und/oder aus der Gruppe der ultraphoben Verbindungen und/oder eine Verbindung aus der Gruppe der Fluor-Verbindungen, beispielsweise Fluorpolymer, und/oder eine Verbindung aus der Gruppe der Polymer-Verbindungen, beispielsweise Polyphosphazene, und/oder eine Verbindung aus der Gruppe der Silikonverbindungen, beispielsweise Polysiloxane, z.B. Polydimethylsiloxan, und/oder eine Verbindung aus der Gruppe der Silanverbindungen, beispielsweise Alkoxysilane und/oder Tetraethoxysilane und/oder Methylalkoxysilane und/oder Polysilane, sein. In einem bevorzugten Ausführungsbeispiel hat die zweite Komponente einen Anteil von nicht mehr als 2% an der Gesamtmenge der Verdunstungsflüssigkeit.

In einem weiteren Ausführungsbeispiel kann zusätzlich oder alternativ mindestens ein Teil der inneren Oberfläche 6 des Erfassungsrohrs 2, vorzugsweise der Teil der inneren Oberfläche 6, der mit der Verdunstungsflüssigkeit in Kontakt kommt, derart bearbeitet werden, dass die Benetzung der inneren Oberfläche 6 des Erfassungsrohrs 2 mit der Verdunstungsflüssigkeit in diesem Bereich verringert ist. Dies kann beispielsweise durch Anrauen realisiert werden.

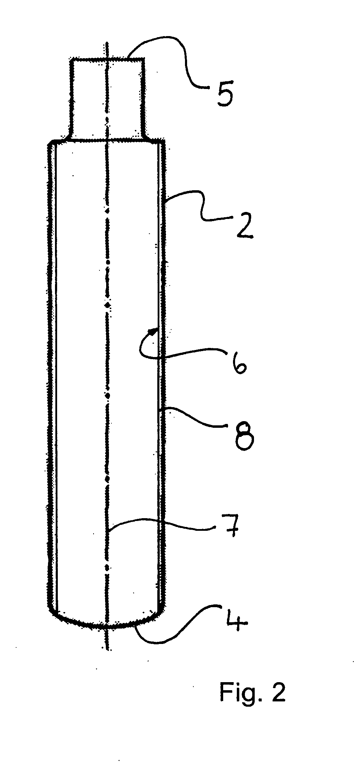

Anhand von Fig. 2 ist ein weiteres Ausführungsbeispiel für ein erfindungsgemäßes Erfassungsrohr 2 dargestellt. Das vorzugsweise aus Glas bestehende Erfassungsrohr 2 weist entlang der sich parallel zur Längsachse 7 erstreckenden inneren Oberfläche 6 eine Beschichtung 8 auf. Hierdurch wird die Benetzung der inneren Oberfläche 6 des Erfassungsrohrs 2 mit Verdunstungsflüssigkeit 3 in dem beschichteten Bereich verringert. Diese Beschichtung kann beispielsweise mindestens teilweise aus Nanopartikeln bestehen, die in einem bevorzugten Ausführungsbeispiel stäbchenförmig ausgebildet sind und auf der inneren Oberfläche 6 irregulär angeordnet sind und eine mittlere Schichtdicke zwischen 20 nm und 40 nm, vorzugsweise etwa 30 nm aufweisen. In einem weiteren Ausführungsbeispiel können die Nanopartikel eine Noppenstruktur auf der inneren Oberfläche 6 des Erfassungsrohrs 2 bilden. In einem weiteren Ausführungsbeispiel ist die Beschichtung 8 aus Nanopartikeln mindestens teilweise aus einer Verbindung aus der Gruppe der Titan-Silane gebildet.

Die Beschichtung kann in weiteren Ausführungsbeispielen mindestens teilweise aus einer Verbindung aus der Gruppe der Polymer-Verbindungen, vorzugsweise aus einer Verbindung aus der Gruppe der Polyethylen-Verbindungen, beispielsweise Polyethylen oder Polyoxyethylen(20)-sorbitanmonooleat, und/oder vorzugsweise mittels einer Verbindung aus der Gruppe der Polyphosphazene und/oder vorzugsweise aus einer Verbindung aus der Gruppe der Silikon-Verbindungen, beispielsweise eine Lösung oder eine Emulsion von oligomeren oder polyomeren Dimethylsiloxanen und/oder eine wässrige Emulsion aus Polydimethylsiloxan und Emulgatoren und/oder Polydimethylsiloxan ggf. mit anschließender thermischer Fixierung der Beschichtung am Glas und/oder eine Verbindung aus der Gruppe der Polysiloxane und/oder eine Verbindung aus der Gruppe der Silane, beispielsweise Alkoxysilane und/oder Tetraethoxysilane und/oder Methylalkoxysilane und/oder Polysilane, und/oder aus einer Verbindung aus der Gruppe der Fluor-Verbindungen, vorzugsweise mittels einer Verbindung aus der Gruppe der Fluorpolymere, beispielsweise als Nanopartikel und/oder fluorierte Polyurethane und/oder Polytetrafluorethylen (PTFE, Teflon), und/oder vorzugsweise mittels einer Verbindung aus der Gruppe der Fluoralkylverbindungen, und/oder aus einer Verbindung aus der Gruppe der Petroleumdestillat-Verbindungen bestehen.

Durch die vorstehend erläuterten Maßnahmen wird erreicht, dass die Größe der frei liegenden Oberfläche der Verdunstungsflüssigkeit bei sinkendem Flüssigkeitsspiegel konstant bleibt und somit die Messgenauigkeit bei der Erfassung der von einem Raumheizkörper über einen bestimmten Zeitraum abgegebenen Wärmemenge erhöht wird.

### Bezugszeichenliste:

- 1: Vorrichtung zur Erfassung der Wärmemenge, Heizkostenverteiler
- 2: Erfassungsrohr
- 3: Verdunstungsflüssigkeit
- 4: unteres Ende des Erfassungsrohrs
- 5: oberes Ende des Erfassungsrohrs
- 6: innere Oberfläche des Erfassungsrohrs
- 7: Längsachse
- 8: Beschichtung

## Patentansprüche

1. Verdunstungsflüssigkeit zum Einsatz in einer Vorrichtung zur Erfassung einer von einem Raumheizkörper über einen bestimmten Zeitraum abgegebenen Wärmemenge nach dem Verdunstungsprinzip mit mindestens einer ersten Komponente, **dadurch gekennzeichnet, dass** die Verdunstungsflüssigkeit mindestens eine zweite Komponente aufweist, welche die Benetzung der inneren Oberfläche eines Erfassungsrohrs der Vorrichtung zur Erfassung der Wärmemenge verringert.

2. Verdunstungsflüssigkeit nach Anspruch 1, **dadurch gekennzeichnet, dass** die zweite Komponente eine Verbindung aus der Gruppe der hydrophoben Verbindungen und/oder aus der Gruppe der oleophoben Verbindungen und/oder aus der Gruppe der ultraphoben Verbindungen und/oder eine Verbindung aus der Gruppe der Fluorverbindungen und/oder eine Verbindung aus der Gruppe der Silikonverbindungen und/oder eine Verbindung aus der Gruppe der Silanverbinungen und/oder eine Verbindung aus der Gruppe der Polymerverbindungen ist.

3. Erfassungsrohr zum Einsatz in einer Vorrichtung zur Erfassung einer von einem Raumheizkörper über einen bestimmten Zeitraum abgegebenen Wärmemenge nach dem Verdunstungsprinzip, das an einem Ende geschlossen sowie an dem anderen Ende offen und zur Füllung mit einer Verdunstungsflüssigkeit bestimmt ist, **dadurch gekennzeichnet, dass** mindestens ein Teil der inneren Oberfläche des Erfassungsrohrs, vorzugsweise der Teil der inneren Oberfläche des Erfassungsrohrs, der mit der Verdunstungsflüssigkeit in Kontakt kommt, derart bearbeitet ist, dass die Benetzung der inneren Oberfläche des Erfassungsrohrs mit der Verdunstungsflüssigkeit in diesem Bereich verringert ist.

4. Erfassungsrohr nach Anspruch 3, **dadurch gekennzeichnet, dass** die Bearbeitung eine Beschichtung der inneren Oberfläche des Erfassungsrohrs umfasst.

5. Erfassungsrohr nach Anspruch 4, **dadurch gekennzeichnet, dass** das Erfassungsrohr aus Glas besteht und seine innere Oberfläche mindestens teilweise mittels Nanopartikeln und/oder mittels einer Verbindung aus der Gruppe der Polymer-Verbindungen, vorzugsweise mittels einer Verbindung aus der Gruppe der Polyethylen-Verbindungen, beispielsweise Polyethylen oder Polyoxyethylen(20)-sorbitanmonooleat, und/oder vorzugsweise mittels einer Verbindung aus der Gruppe der Polyphosphazene und/oder vorzugsweise mittels einer Verbindung aus der Gruppe der Silikon-Verbindungen, beispielsweise eine Lösung oder eine Emulsion von oligomeren oder polyomeren Dimethylsiloxanen und/oder eine wässrige Emulsion aus Polydimethylsiloxan und Emulgatoren und/oder Polydimethylsiloxan ggf. mit anschließender thermischer Fixierung der Beschichtung am Glas und/oder eine Verbindung aus der Gruppe der Polysiloxane und/oder eine Verbindung aus der Gruppe der Silane, beispielsweise Alkoxysilane und/oder Tetraethoxysilane und/oder Methylalkoxysilane und/oder Polysilane, und/oder mittels einer Verbindung aus der Gruppe der Fluor-Verbindungen, vorzugsweise mittels einer Verbindung aus der Gruppe der Fluorpolymere, beispielsweise als Nanopartikel und/oder fluorierte Polyurethane und/oder Polytetrafluorethylen (PTFE, Teflon), und/oder vorzugsweise mittels einer Verbindung aus der Gruppe der Fluoralkylverbindungen, und/oder mittels einer Verbindung aus der Gruppe der Petroleumdestillat-Verbindungen beschichtet ist.

6. Erfassungsrohr nach Anspruch 5, **dadurch gekennzeichnet, dass** die Nanopartikel stäbchenförmig ausgebildet und auf der inneren Oberfläche des Erfassungsrohrs irregulär angeordnet sind und eine Schicht mit einer mittleren Schichtdicke zwischen 20 nm und 40 nm, vorzugsweise von etwa 30 nm bilden.

7. Erfassungsrohr nach Anspruch 5, **dadurch gekennzeichnet, dass** die Nanopartikel eine Noppenstruktur auf der inneren Oberfläche des Erfassungsrohrs bilden.

8. Erfassungsrohr nach Anspruch 5, **dadurch gekennzeichnet, dass** die Nanopartikel mindestens teilweise aus einer Verbindung aus der Gruppe der Titan-Silane bestehen.

9. Vorrichtung zur Erfassung einer von einem Raumheizkörper über einen bestimmten Zeitraum abgegebenen Wärmemenge nach dem Verdunstungsprinzip mit einem System umfassend mindestens ein an einem Ende geschlossenes und an dem anderen Ende offenes Erfassungsrohr und eine Verdunstungsflüssigkeit, wobei das mindestens eine Erfassungsrohr mindestens teilweise mit der Verdunstungsflüssigkeit gefüllt ist, **dadurch gekennzeichnet, dass** das System Mittel zur Verringerung der Benetzung der Oberfläche des Erfassungsrohrs mit der Verdunstungsflüssigkeit aufweist.

10. Vorrichtung nach Anspruch 9, **dadurch gekennzeichnet, dass** das System eine Verdunstungsflüssigkeit nach einem der Ansprüche 1 bis 2 und/oder ein Erfassungsrohr nach einem der Ansprüche 3 bis 8 aufweist.
